# EUROPEAN PATENT SPECIFICATION

(11) **EP 4 177 813 B1**
(45) Date of publication and mention of the grant of the patent: **09.09.2026**
(21) Application number: 21838680.3
(22) Date of filing: 05.07.2021
(51) Int. Cl.: G06Q 30/06, G06Q 30/02, G06Q 30/0601

(54) **FISH PURCHASING SYSTEM**
FISCHKAUFSYSTEM
SYSTÈME D'ACHAT DE POISSONS

(30) Priority: 06.07.2020 JP 2020116099
(43) Date of publication of application: 10.05.2023
(73) Proprietor: DENTSU INC., Tokyo 105-7001 (JP)
(72) Inventor: SHIMURA Kazuhiro, Tokyo 105-7001 (JP)
(74) Representative: Bardehle Pagenberg Partnerschaft mbB Patentanwälte Rechtsanwälte
(86) International application number: PCT/JP2021/025229
(87) International publication number: WO 2022/009813

(56) References cited:
- WO-A1-2019/103880
- JP-A- 2002 203 133
- JP-A- 2002 297 966
- JP-A- 2010 197 151
- JP-A- 2012 088 818
- JP-A- 2013 069 259
- US-A1- 2019 228 218

## Description

### [Technical Field]

The present invention relates to a fish purchasing system including a function of determining quality of a fish (particularly, a tuna).

### [Background Art]

Conventionally, there has been proposed a technique for evaluating freshness of fish and shellfish (for example, see Patent Literature 1). Moreover, in wholesale fish markets and the like, conventionally, quality of a tuna is determined by seeing a cross section of a tail of the tuna.

### [Citation List]

### [Patent Literature]

[Patent Literature 1] Japanese Patent Laid-Open No. 2010-286262.

US 2019/228218 A1 discloses determining physical characteristics of fish, in particular size, shape and weight, using image processing and machine learning techniques.

### [Summary of Invention]

### [Technical Problem]

Many years of experience are required to determine quality of a tuna from a cross section of a tail of the tuna, and it is difficult for a person to determine quality of a tuna unless the person is fairly skilled. Accordingly, it has been desired to develop a system that allows anyone (even if not a skilled person) to determine quality of a tuna. Moreover, business operators engaged in intermediate wholesaling or retailing purchase tunas by visiting fish factories and the like at various locations. Accordingly, it has been desired to develop a system that makes it possible to easily purchase a tuna remotely.

The present invention has been made in view of the above problems, and an object thereof is to provide a fish purchasing system that allows a person, even if not skilled, to determine quality of a fish, and that makes it possible to easily purchase a fish remotely.

### [Solution to Problem]

A fish purchasing system of the present invention includes: a first machine learning section that analyzes, through machine learning, a relation between image data obtained by capturing an image of a cross section of a tail of a fish, and quality data indicating quality of the fish; a first input section into which image data on a cross section of a tail of a fish under determination is inputted; a first inference section that receives as an input, the image data on the cross section of the tail of the fish under determination inputted into the first input section, and infers and outputs quality of the fish under determination, based on the relation analyzed by the first machine learning section; a second machine learning section that analyzes, through machine learning, a relation of the quality data on the fish and weight data indicating a weight of the fish, with price data indicating a price of the fish; a second input section into which weight data on the fish under determination is inputted; a second inference section that receives as inputs, the quality data on the fish under determination outputted from the first inference section and the weight data on the fish under determination inputted into the second input section, and infers and outputs a price of the fish under determination, based on the relation analyzed by the second machine learning section; a database section that stores the quality data on the fish outputted from the first inference section, the weight data on the fish inputted from the second input section, and the price data on the fish outputted from the second inference section in association with each other; a data acquisition section that acquires, from a user device, quality data, weight data, and price data on a fish desired for purchase, as desired conditions for purchase; a condition comparison section that compares the quality data, the weight data, and the price data on the fish desired for purchase acquired by the data acquisition section, with the quality data, the weight data, and the price data on the fish stored in the database section, and outputs a fish that meets the desired conditions for purchase; and an order processing section that, when a fish that the user purchases is selected based on a user input from the user device from among the fish that meet the desired conditions for purchase, outputted from the condition comparison section, performs processing of ordering the selected fish.

According to such a configuration, by using machine learning, a person is allowed to determine quality of a fish, even if the person is not skilled. Quality data on a fish outputted from the first inference section, weight data on the fish inputted from the second input section, and price data on the fish outputted from the second inference section are stored in the database section in association with each other. When quality data, weight data, and price data on a fish desired for purchase are acquired from the user device as desired conditions for purchase, the desired conditions for purchase are compared with the quality data, the weight data, and the price data on the fish stored in the database section, and fish that meet the desired conditions for purchase are outputted. Then, when a fish that the user will purchase is selected based on a user input from the user device from among the outputted fish that meet the desired conditions for purchase, processing of ordering the selected fish is performed. Thus, a fish can be easily purchased remotely, by inputting a quality, a weight, and a price of a fish desired for purchase, and selecting a fish to purchase from among outputted fish that meet the desired conditions for purchase.

In the fish purchasing system of the present invention, the database section may store storage place data indicating a place where the fish is stored, in association with the quality data, the weight data, and the price data on the fish, the data acquisition section may acquire, from the user device, delivery date data indicating a date of delivery of the fish desired for purchase, and delivery place data indicating a place of delivery of the fish desired for purchase, as the desired conditions for purchase, and the condition comparison section, based on the delivery date data and the delivery place data on the fish desired for purchase acquired by the data acquisition section, and on the storage place data on the fish stored in the database section, may output a fish that is deliverable to the place of delivery by the date of delivery, as the fish that meets the desired conditions for purchase.

According to such a configuration, storage place data on a fish is stored in the database section in association with quality data, weight data, and price data on the fish. When delivery date data and delivery place data on a fish desired for purchase are acquired from the user device, fish that are deliverable to the place of delivery by the date of delivery are outputted as fish that meet the desired conditions for purchase. Thus, a fish that is deliverable to a place of delivery by a date of delivery can be easily purchased.

A method of the present invention is a method performed in a fish purchasing system, including: a first machine learning step of analyzing, through machine learning, a relation between image data obtained by capturing an image of a cross section of a tail of a fish, and quality data indicating quality of the fish; a first input step of receiving as an input, image data on a cross section of a tail of a fish under determination; a first inference step of receiving as an input, the image data on the cross section of the tail of the fish under determination inputted in the first input step, and inferring and outputting quality of the fish under determination, based on the relation analyzed in the first machine learning step; a second machine learning step of analyzing, through machine learning, a relation of the quality data on the fish and weight data indicating a weight of the fish, with price data indicating a price of the fish; a second input step of receiving as an input, weight data on the fish under determination; a second inference step of receiving as inputs, the quality data on the fish under determination outputted from the first inference step and the weight data on the fish under determination inputted in the second input step, and inferring and outputting a price of the fish under determination, based on the relation analyzed in the second machine learning step; a storage step of storing, in a database section, the quality data on the fish outputted from the first inference step, the weight data on the fish inputted from the second input step, and the price data on the fish outputted from the second inference step in association with each other; a data acquisition step of acquiring, from a user device, quality data, weight data, and price data on a fish desired for purchase, as desired conditions for purchase; a condition comparison step of comparing the quality data, the weight data, and the price data on the fish desired for purchase acquired in the data acquisition step, with the quality data, the weight data, and the price data on the fish stored in the database section, and outputting a fish that meets the desired conditions for purchase; and an order processing step of, when a fish that the user purchases is selected based on a user input from the user device from among the fish that meet the desired conditions for purchase, outputted from the condition comparison step, performing processing of ordering the selected fish.

With such a method as well, similarly to the above-mentioned system, by using machine learning, a person is allowed to determine quality of a fish, even if the person is not skilled. Moreover, a fish can be easily purchased remotely, by inputting a quality, a weight, and a price of a fish desired for purchase, and selecting a fish to purchase from among outputted fish that meet the desired conditions for purchase.

### [Advantageous Effect of Invention]

According to the present invention, a person, even if not skilled, is allowed to determine quality of a fish, and it is possible to easily purchase a fish remotely.

### [Brief Description of Drawings]

[Figure 1] Figure 1 is a block diagram of a purchase system in an embodiment of the present invention.
[Figure 2] Figure 2 is an example of image data on a cross section of a tail of a fish (tuna) in the embodiment of the present invention.
[Figure 3] Figure 3 shows an example of data stored in a database section.
[Figure 4] Figure 4 is a sequence chart for describing operation of the purchase system in the embodiment of the present invention.

### [Description of Embodiment]

Hereinafter, a fish purchasing system in an embodiment of the present invention is described with reference to the drawings. The present embodiment illustrates a case of a purchase system (remote purchase system) used for purchase of a tuna from a remote location, and the like.

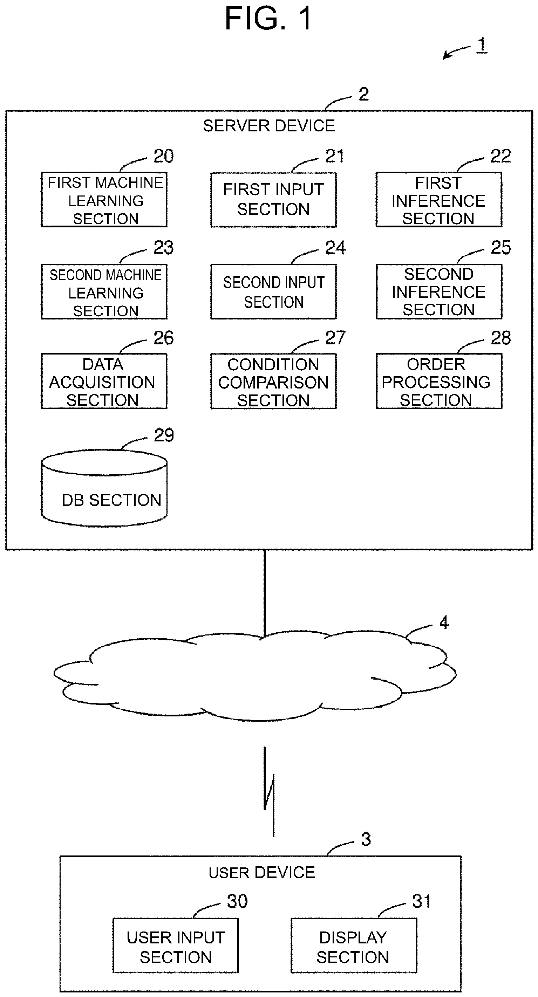

A configuration of the purchase system in the present embodiment is described with reference to a drawing. Figure 1 is a block diagram showing the configuration of the purchase system in the present embodiment. As shown in Figure 1, the purchase system 1 includes a server device 2 and a user device 3. The server device 2 and the user device 3 are communicably connected to each other through a network 4. For example, the server device 2 is a cloud server or the like owned by a provider of a tuna purchase service, and the user device 3 is a terminal device such as a smartphone owned by a business operator engaged in intermediate wholesaling or retailing.

As shown in Figure 1, the server device 2 includes a first machine learning section 20, a first input section 21, a first inference section 22, a second machine learning section 23, a second input section 24, a second inference section 25, a data acquisition section 26, a condition comparison section 27, an order processing section 28, and a database section (DB section) 29.

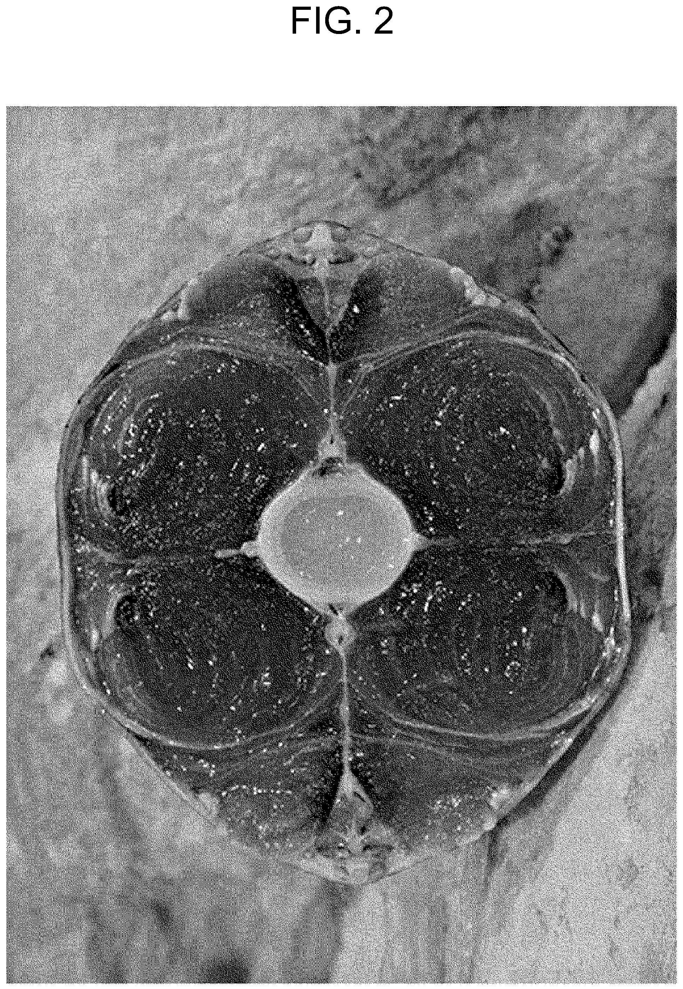

The first machine learning section 20 analyzes, through machine learning, a relation between image data obtained by capturing an image of a cross section of a tail of a tuna (see Figure 2) and quality data indicating quality of the tuna. For the machine learning, an arbitrary scheme, such as deep learning by a neural network, is used.

For example, in a case of a neural network, the neural network is configured such that image data on a cross section of a tail of a tuna is inputted into an input layer, and quality data on the tuna is outputted from an output layer. Then, through supervised learning using analysis data (training data) in which data inputted into the input layer is mapped to data outputted from the output layer, weighting coefficients between neurons of the neural network are optimized. For training quality data, data on a quality (for example, evaluation S, A, B, C, or the like) of a tuna determined from a cross section of a tail of the tuna by a skilled person is used.

Image data on a cross section of a tail of a tuna under determination is inputted into the first input section 21. Image data on a cross section of a tail of a tuna under determination is acquired, for example, by capturing an image of the cross section of the tail of the tuna in fish factories at various locations.

The first inference section 22 inputs the image data on the cross section of the tail of the tuna under determination inputted into the first input section 21, and infers and outputs quality of the tuna under determination, based on the relation analyzed by the first machine learning section 20. For example, in the case of the above-mentioned neural network, inference of quality of the tuna under determination is performed by inputting the image data on the cross section of the tail of the tuna under determination into the input layer, and inferring quality of the tuna under determination and outputting an output from the output layer.

The second machine learning section 23 analyzes, through machine learning, a relation of quality data on a tuna and weight data indicating a weight of the tuna, with price data indicating a price of the tuna. For the machine learning, an arbitrary scheme, such as deep learning by a neural network, is used.

For example, in a case of a neural network, the neural network is configured such that quality data on a tuna and weight data on the tuna are inputted into an input layer, and price data on the tuna is outputted from an output layer. Then, through supervised learning using analysis data (training data) in which data inputted into the input layer is mapped to data outputted from the output layer, weighting coefficients between neurons of the neural network are optimized. For training price data, data on a winning bid price (for example, a price per kilogram or the like) of the tuna on a market is used.

Weight data on the tuna under determination is inputted into the second input section 24. Weight data on a tuna under determination is acquired, for example, by measuring a weight of the tuna in fish factories at various locations.

The second inference section 25 receives as inputs, the quality data on the tuna under determination outputted from the first inference section 22 and the weight data on the tuna under determination inputted into the second input section 24, and infers and outputs a price of the tuna under determination, based on the relation analyzed by the second machine learning section 23. For example, in the case of the above-mentioned neural network, inference of a price of the tuna under determination is performed by inputting the quality data on the tuna under determination and the weight data on the tuna into the input layer, and inferring a price of the tuna under determination and outputting an output from the output layer. Note that the inferred price is used for condition comparison (which will be described later) to determine whether or not a desired condition for purchase is met, and does not necessarily need to be the same as a price at a time of actual purchase.

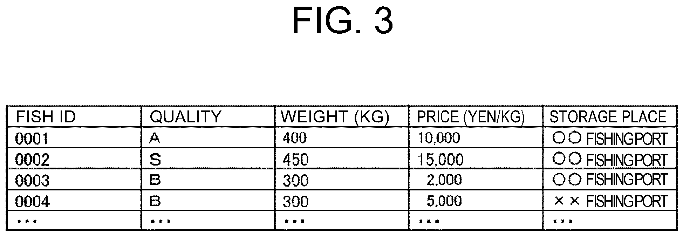

The database section 29 stores the quality data on the tuna outputted from the first inference section 22, the weight data on the tuna inputted from the second input section 24, the price data on the tuna outputted from the second inference section 25, and a storage place data indicating a place where the tuna is stored, in association with each other (see Figure 3).

The data acquisition section 26 acquires quality data, weight data, and price data on a tuna desired for purchase, as desired conditions for purchase, from the user device 3. Moreover, the data acquisition section 26 acquires delivery date data indicating a date of delivery of the tuna desired for purchase, and delivery place data indicating a place of delivery of the tuna desired for purchase, as desired conditions for purchase, from the user device 3.

The condition comparison section 27 compares the quality data, the weight data, and the price data on the tuna desired for purchase acquired by the data acquisition section 26, with quality data, weight data, and price data on tunas stored in the database section 29, and outputs a tuna or tunas that meet the desired conditions for purchase. Moreover, based on the delivery date data and the delivery place data on the tuna desired for purchase acquired by the data acquisition section 26 and storage place data on tunas stored in the database section 29, the condition comparison section 27 outputs a tuna or tunas that are deliverable to the place of delivery by the date of delivery, as a tuna or tunas that meet the desired conditions for purchase.

When a tuna that a user will purchase is selected based on a user input from the user device 3 from among the tuna or tunas outputted from the condition comparison section 27, which meet the desired conditions for purchase, the order processing section 28 performs processing of ordering the selected tuna. For the processing of ordering the tuna, a publicly known technique can be used.

The user device 3 includes a user input section 30 and a display section 31. A user input of desired conditions for purchase or the like is made from the user input section 30. A tuna or tunas outputted from the condition comparison section 27, which meet the desired conditions for purchase, are displayed on the display section 31. A user input for selecting a tuna that the user will purchase, from among the tuna or tunas displayed on the display section 31, which meet the desired conditions for purchase, can be made from the user input section 30.

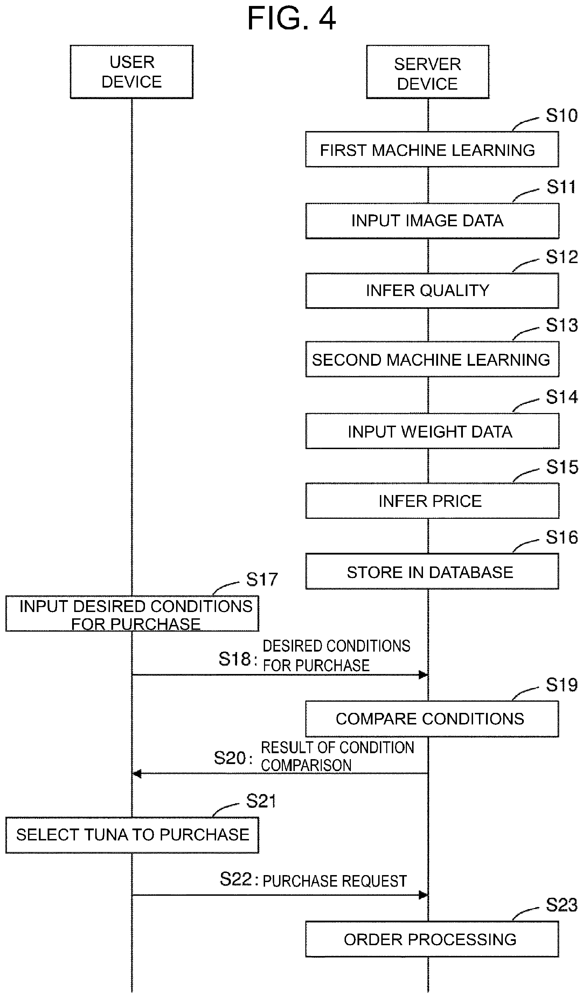

Operation of the purchase system 1 configured as described above is described with reference to a sequence chart of Figure 4.

As shown in Figure 4, in the purchase system 1 in the present embodiment, the first machine learning section 20 of the server device 2 analyzes a relation between image data obtained by capturing an image of a cross section of a tail of a tuna, and quality data indicating quality of the tuna, through machine learning (first machine learning) (S10). When image data on a cross section of a tail of a tuna under determination is inputted into the first input section 21 of the server device 2 (S11), the first inference section 22 of the server device 2 receives as an input, the image data on the cross section of the tail of the tuna under determination, and infers and outputs quality of the tuna under determination, based on the relation analyzed through the first machine learning (S12).

Moreover, the second machine learning section 23 of the server device 2 analyzes a relation of quality data on a tuna and weight data indicating a weight of the tuna, with price data indicating a price of the tuna, through machine learning (second machine learning) (S13). When weight data on the tuna under determination is inputted into the second input section 24 of the server device 2 (S14), the second inference section 25 of the server device 2 receives as inputs, the quality data on the tuna under determination outputted by the first inference section 22 and the weight data on the tuna under determination inputted into the second input section 24, and infers and outputs a price of the tuna under determination, based on the relation analyzed through the second machine learning (S15).

The quality data on the tuna outputted from the first inference section 22, the weight data on the tuna inputted from the second input section 24, and the price data on the tuna outputted from the second inference section 25 are stored together with storage place data indicating a place where the tuna is stored, in association with each other, in the database section 29 (S16).

When quality data, weight data, price data, delivery date data, and delivery place data on a tuna desired for purchase are inputted, as desired conditions for purchase, in the user input section 30 of the user device 3 (S17), the inputted desired conditions for purchase are transmitted to the server device 2 (S18). The condition comparison section 27 of the server device 2 compares the quality data, the weight data, and the price data on the tuna desired for purchase, with quality data, weight data, and price data on tunas stored in the database section 29, and outputs a tune or tunas that meet the desired conditions for purchase (S19). At the time, based on the delivery date data and the delivery place data on the tuna desired for purchase and storage place data on the tunas stored in the database section 29, the condition comparison section 27 of the server device 2 outputs a tuna or tunas that are deliverable to the place of delivery by the date of delivery, as the tuna or tunas that meet the desired conditions for purchase (S19).

When data on the tuna or tunas outputted from the condition comparison section 27 of the server device 2, which meet the desired conditions for purchase, are transmitted to the user device 3 (S20), a user input for selecting a tuna to purchase, from among the tuna or tunas that meet the desired conditions for purchase, is made in the user input section 30 of the user device 3 (S21). When the user input for selecting the tuna to purchase is made, a request to purchase the selected tuna is transmitted from the user device 3 to the server device 2 (S22), and the order processing section 28 of the server device 2 performs processing of ordering the selected tuna (S23).

According to the purchase system 1 in the present embodiment as described above, by using machine learning, a person, even if not skilled, is allowed to determine quality of a tuna. Quality data on a tuna outputted from the first inference section 22, weight data on the tuna inputted from the second input section 24, and price data on the tuna outputted from the second inference section 25 are stored in the database section 29 in association with each other. When quality data, weight data, and price data on a tuna desired for purchase is acquired from the user device 3 as desired conditions for purchase, the desired conditions for purchase are compared with quality data, weight data, and price data on tunas stored in the database section 29, and a tuna or tunas that meet the desired conditions for purchase are outputted. Then, when a tuna that a user will purchase is selected based on a user input from the user device 3 from among the outputted tuna or tunas that meet the desired conditions for purchase, processing of ordering the selected tuna is performed. Thus, a tuna can be easily purchased even from a remote location, by inputting a quality, a weight, and a price of a tuna desired for purchase, and selecting a tuna to purchase from among outputted tunas that meet the desired conditions for purchase.

Moreover, in the present embodiment, storage place data on a tuna is stored in the database section 29 in association with quality data, weight data, and price data on the tuna. When delivery date data and delivery place data on a tuna desired for purchase are acquired from the user device 3, a tuna or tunas that are deliverable to the place of delivery by the date of delivery are outputted as a tune or tunas that meet the desired conditions for purchase. Thus, a tuna that is deliverable to the place of delivery by the date of delivery can be easily purchased.

Although an embodiment of the present invention has been described as an illustration hereinabove, the scope of the present invention is not limited to the illustrated matters, and changes and modifications can be made according to purposes within the scope according to claims.

### [Industrial Applicability]

As described above, the fish purchasing system according to the present invention has advantageous effects of allowing a person, even if not skilled, to determine quality of a fish, and making it possible to easily purchase a fish remotely, and is useful as a remote purchase system for tuna, and the like.

### [Reference Signs List]

1 Purchase system
2 Server device
3 User device
4 Network
20 First machine learning section
21 First input section
22 First inference section
23 Second machine learning section
24 Second input section
25 Second inference section
26 Data acquisition section
27 Condition comparison section
28 Order processing section
29 Database section
30 User input section
31 Display section

## Claims

1. A system **characterized in that**
the system is configured to suggest a fish that meets a desired conditions for purchase, wherein the system comprises:
a first machine learning section that analyzes, through machine learning, a relation between image data obtained by capturing an image of a cross section of a tail of a fish, and quality data indicating quality of the fish;
a first input section into which image data on a cross section of a tail of a fish under determination is inputted;
a first inference section that receives as an input, the image data on the cross section of the tail of the fish under determination inputted into the first input section, and infers and outputs quality of the fish under determination, based on the relation analyzed by the first machine learning section;
a second machine learning section that analyzes, through machine learning, a relation of the quality data on the fish and weight data indicating a weight of the fish, with price data indicating a price of the fish;
a second input section into which weight data on the fish under determination is inputted;
a second inference section that receives as inputs, the quality data on the fish under determination outputted from the first inference section and the weight data on the fish under determination inputted into the second input section, and infers and outputs a price of the fish under determination, based on the relation analyzed by the second machine learning section;
a database section that stores the quality data on the fish outputted from the first inference section, the weight data on the fish inputted from the second input section, and the price data on the fish outputted from the second inference section in association with each other;
a data acquisition section that acquires as the desired conditions for purchase, from a user device, quality data, weight data, and price data on a fish desired for purchase, as desired conditions for purchase;
a condition comparison section that compares the quality data, the weight data, and the price data on the fish desired for purchase acquired by the data acquisition section, with the quality data, the weight data, and the price data on the fish stored in the database section, and outputs a fish that meets the desired conditions for purchase; and
a data transmitting section that transmits a data on a fish which meets the desired conditions for purchase and outputted from the condition comparison section, to the user device.

2. The system according to claim 1, wherein
the database section stores storage place data indicating a place where the fish is stored, in association with the quality data, the weight data, and the price data on the fish,
the data acquisition section acquires, from the user device, delivery date data indicating a date of delivery of the fish desired for purchase, and delivery place data indicating a place of delivery of the fish desired for purchase, as the desired conditions for purchase, and
the condition comparison section, based on the delivery date data and the delivery place data on the fish desired for purchase acquired by the data acquisition section, and on the storage place data on the fish stored in the database section, outputs a fish that is deliverable to the place of delivery by the date of delivery, as the fish that meets the desired conditions for purchase.

3. A method performed in a system **characterized in that** the system is configured to suggest a fish that meets a desired conditions for purchase, wherein the method comprises:
a first machine learning step of analyzing, through machine learning, a relation between image data obtained by capturing an image of a cross section of a tail of a fish, and quality data indicating quality of the fish;
a first input step of receiving as an input, image data on a cross section of a tail of a fish under determination;
a first inference step of receiving as an input, the image data on the cross section of the tail of the fish under determination inputted in the first input step, and inferring and outputting quality of the fish under determination, based on the relation analyzed in the first machine learning step;
a second machine learning step of analyzing, through machine learning, a relation of the quality data on the fish and weight data indicating a weight of the fish, with price data indicating a price of the fish;
a second input step of receiving as an input, weight data on the fish under determination;
a second inference step of receiving as inputs, the quality data on the fish under determination outputted from the first inference step and the weight data on the fish under determination inputted in the second input step, and inferring and outputting a price of the fish under determination, based on the relation analyzed in the second machine learning step;
a storage step of storing, in a database section, the quality data on the fish outputted from the first inference step, the weight data on the fish inputted from the second input step, and the price data on the fish outputted from the second inference step in association with each other;
a data acquisition step of acquiring as the desired conditions for purchase, from a user device, quality data, weight data, and price data on a fish desired for purchase, as desired conditions for purchase;
a condition comparison step of comparing the quality data, the weight data, and the price data on the fish desired for purchase acquired in the data acquisition step, with the quality data, the weight data, and the price data on the fish stored in the database section, and outputting a fish that meets the desired conditions for purchase; and
a data transmitting step of transmitting a data on a fish which meets the desired conditions for purchase and outputted from the condition comparison section, to the user device.

## Patentansprüche

1. Ein System, **dadurch gekennzeichnet, dass**
das System konfiguriert ist, um einen Fisch vorzuschlagen, der gewünschte Bedingungen für Kauf erfüllt, wobei das System umfasst:
einen ersten maschinellen Lernabschnitt, der analysiert, durch maschinelles Lernen, eine Beziehung zwischen Bilddaten, die durch Aufnehmen eines Bildes eines Querschnitts eines Schwanzes eines Fisches erhalten werden, und Qualitätsdaten, die die Qualität des Fisches angeben;
einen ersten Eingabeabschnitt, in den Bilddaten über einen Querschnitt eines Schwanzes eines zu bestimmenden Fisches eingegeben werden;
einen ersten Inferenzabschnitt, der als eine Eingabe die Bilddaten über den Querschnitt des Schwanzes des zu bestimmenden Fisches empfängt, die in den ersten Eingabeabschnitt eingegeben werden, und die Qualität des zu bestimmenden Fisches ableitet und ausgibt, basierend auf der Beziehung, die durch den ersten maschinellen Lernabschnitt analysiert wird;
einen zweiten maschinellen Lernabschnitt, der analysiert, durch maschinelles Lernen, eine Beziehung der Qualitätsdaten über den Fisch und Gewichtsdaten, die ein Gewicht des Fisches angeben, mit Preisdaten, die einen Preis des Fisches angeben;
einen zweiten Eingabeabschnitt, in den Gewichtsdaten über den zu bestimmenden Fisch eingegeben werden;
einen zweiten Inferenzabschnitt, der als Eingaben die Qualitätsdaten über den zu bestimmenden Fisch, die von dem ersten Inferenzabschnitt ausgegeben werden, und die Gewichtsdaten über den zu bestimmenden Fisch empfängt, die in den zweiten Eingabeabschnitt eingegeben werden, und einen Preis des zu bestimmenden Fisches ableitet und ausgibt, basierend auf der Beziehung, die durch den zweiten maschinellen Lernabschnitt analysiert wird;
einen Datenbankabschnitt, der die Qualitätsdaten über den Fisch, die von dem ersten Inferenzabschnitt ausgegeben werden, die Gewichtsdaten über den Fisch, die von dem zweiten Eingabeabschnitt eingegeben werden, und die Preisdaten über den Fisch, die von dem zweiten Inferenzabschnitt ausgegeben werden, in Verbindung miteinander speichert;
einen Datenerfassungsabschnitt, der als die gewünschten Bedingungen für Kauf, von einer Benutzervorrichtung, Qualitätsdaten, Gewichtsdaten und Preisdaten über einen Fisch, der für Kauf gewünscht ist, als gewünschte Bedingungen für Kauf erfasst;
einen Bedingungsvergleichsabschnitt, der die Qualitätsdaten, die Gewichtsdaten und die Preisdaten über den Fisch, der für Kauf gewünscht ist, die durch den Datenerfassungsabschnitt erfasst werden, mit den Qualitätsdaten, den Gewichtsdaten und den Preisdaten über den Fisch vergleicht, die in dem Datenbankabschnitt gespeichert sind, und einen Fisch ausgibt, der die gewünschten Bedingungen für Kauf erfüllt; und
einen Datenübertragungsabschnitt, der Daten über einen Fisch, der die gewünschten Bedingungen für Kauf erfüllt und von dem Bedingungsvergleichsabschnitt ausgegeben wird, an die Benutzervorrichtung überträgt.

2. System nach Anspruch 1, wobei
der Datenbankabschnitt Speicherplatzdaten speichert, die einen Ort angeben, an dem der Fisch gespeichert ist, in Verbindung mit den Qualitätsdaten, den Gewichtsdaten und den Preisdaten über den Fisch,
der Datenerfassungsabschnitt, von der Benutzervorrichtung, Lieferdatumsdaten, die ein Lieferdatum des Fisches angeben, der für Kauf gewünscht ist, und Lieferplatzdaten, die einen Lieferplatz des Fisches angeben, der für Kauf gewünscht ist, als die gewünschten Bedingungen für Kauf erfasst, und
der Bedingungsvergleichsabschnitt, basierend auf den Lieferdatumsdaten und den Lieferplatzdaten über den Fisch, der für Kauf gewünscht ist, die durch den Datenerfassungsabschnitt erfasst werden, und auf den Speicherplatzdaten über den Fisch, die in dem Datenbankabschnitt gespeichert sind, einen Fisch ausgibt, der an den Lieferplatz durch das Lieferdatum lieferbar ist, als den Fisch, der die gewünschten Bedingungen für Kauf erfüllt.

3. Ein Verfahren, das in einem System durchgeführt wird, **dadurch gekennzeichnet, dass**
das System konfiguriert ist, um einen Fisch vorzuschlagen, der gewünschte Bedingungen für Kauf erfüllt, wobei das Verfahren umfasst:
einen ersten maschinellen Lernschritt des Analysierens, durch maschinelles Lernen, einer Beziehung zwischen Bilddaten, die durch Aufnehmen eines Bildes eines Querschnitts eines Schwanzes eines Fisches erhalten werden, und Qualitätsdaten, die die Qualität des Fisches angeben;
einen ersten Eingabeschritt des Empfangens, als eine Eingabe, von Bilddaten über einen Querschnitt eines Schwanzes eines zu bestimmenden Fisches;
einen ersten Inferenzschritt des Empfangens, als eine Eingabe, der Bilddaten über den Querschnitt des Schwanzes des zu bestimmenden Fisches, die in dem ersten Eingabeschritt eingegeben werden, und Ableiten und Ausgeben der Qualität des zu bestimmenden Fisches, basierend auf der Beziehung, die in dem ersten maschinellen Lernschritt analysiert wird;
einen zweiten maschinellen Lernschritt des Analysierens, durch maschinelles Lernen, einer Beziehung der Qualitätsdaten über den Fisch und Gewichtsdaten, die ein Gewicht des Fisches angeben, mit Preisdaten, die einen Preis des Fisches angeben;
einen zweiten Eingabeschritt des Empfangens, als eine Eingabe, von Gewichtsdaten über den zu bestimmenden Fisch;
einen zweiten Inferenzschritt des Empfangens, als Eingaben, der Qualitätsdaten über den zu bestimmenden Fisch, die von dem ersten Inferenzschritt ausgegeben werden, und der Gewichtsdaten über den zu bestimmenden Fisch, die in dem zweiten Eingabeschritt eingegeben werden, und Ableiten und Ausgeben eines Preises des zu bestimmenden Fisches, basierend auf der Beziehung, die in dem zweiten maschinellen Lernschritt analysiert wird;
einen Speicherschritt des Speicherns, in einem Datenbankabschnitt, der Qualitätsdaten über den Fisch, die von dem ersten Inferenzschritt ausgegeben werden, der Gewichtsdaten über den Fisch, die von dem zweiten Eingabeschritt eingegeben werden, und der Preisdaten über den Fisch, die von dem zweiten Inferenzschritt ausgegeben werden, in Verbindung miteinander;
einen Datenerfassungsschritt des Erfassens, als die gewünschten Bedingungen für Kauf, von einer Benutzervorrichtung, von Qualitätsdaten, Gewichtsdaten und Preisdaten über einen Fisch, der für Kauf gewünscht ist, als gewünschte Bedingungen für Kauf;
einen Bedingungsvergleichsschritt des Vergleichens der Qualitätsdaten, der Gewichtsdaten und der Preisdaten über den Fisch, der für Kauf gewünscht ist, die in dem Datenerfassungsschritt erfasst werden, mit den Qualitätsdaten, den Gewichtsdaten und den Preisdaten über den Fisch, die in dem Datenbankabschnitt gespeichert sind, und Ausgeben eines Fisches, der die gewünschten Bedingungen für Kauf erfüllt; und
einen Datenübertragungsschritt des Übertragens von Daten über einen Fisch, der die gewünschten Bedingungen für Kauf erfüllt und von dem Bedingungsvergleichsabschnitt ausgegeben wird, an die Benutzervorrichtung.

## Revendications

1. Un système **caractérisé en ce que** :
le système est configuré pour suggérer un poisson qui remplit des conditions souhaitées pour l'achat, le système comprenant :
une première section à apprentissage machine qui analyse, par l'intermédiaire d'un apprentissage machine, une relation entre des données d'image obtenues par capture d'une image d'une darne d'une queue d'un poisson, et des données de qualité indiquant la qualité du poisson ;
une première section d'entrée à laquelle sont appliquées en entrée des données d'image sur une darne d'une queue d'un poisson en détermination ;
une première section d'inférence qui reçoit en entrée les données d'image sur la darne de la queue du poisson en détermination appliquées en entrée à la première section d'entrée, et infère et délivre en sortie une qualité du poisson en détermination, sur la base de la relation analysée par la première section à apprentissage machine ;
une seconde section à apprentissage machine qui analyse, par l'intermédiaire d'un apprentissage machine, une relation des données de qualité sur le poisson et de données de poids indiquant un poids du poisson, avec des données de prix indiquant un prix du poisson ;
une seconde section d'entrée à laquelle sont appliquées en entrée les données d'entrée sur le poisson en détermination ;
une seconde section d'inférence qui reçoit en tant qu'entrées les données de qualité du poisson en détermination délivrées en sortie par la première section d'inférence et
les données de poids sur le poisson en détermination appliquées en entrée à la seconde section d'entrée, et infère et délivre en sortie un prix du poisson en détermination, sur la base de la relation analysée par la seconde section à apprentissage machine ;
une section de base de données qui stocke les données de qualité sur le poisson délivrées en sortie par la première section d'inférence, les données de poids sur le poisson appliquées en entrée depuis la seconde section d'entrée, et les données de prix sur le poisson délivrées en sortie par la seconde section d'inférence, en association les unes avec les autres ;
une section d'acquisition de données qui acquiert en tant que conditions souhaitées pour l'achat, en provenance d'un dispositif utilisateur, des données de qualité, des données de poids, et des données de prix sur un poisson souhaité pour l'achat, en tant que conditions souhaitées pour l'achat ;
une section de comparaison de conditions qui compare les données de qualité, les données de poids, et les données de prix sur le poisson souhaité pour l'achat acquises par la section d'acquisition de données, avec les données de qualité, les données de poids, et les données de prix sur le poisson stockées dans la section de base de données, et indique en sortie un poisson qui remplit les conditions souhaitées pour l'achat ; et
une section de transmission de données qui transmet au dispositif utilisateur des données sur un poisson qui remplit les conditions souhaitées pour l'achat et délivrées en sortie par la section de comparaison de conditions.

2. Le système selon la revendication 1, dans lequel :
la section de base de données stocke des données d'emplacement de stockage indiquant un emplacement où est stocké le poisson, en association avec les données de qualité, les données de poids, et les données de prix sur le poisson ;
la section d'acquisition de données acquiert, en provenance du dispositif utilisateur, des données de date de livraison indiquant une date de livraison du poisson souhaité pour l'achat, et des données d'emplacement de livraison indiquant un emplacement de livraison du poisson souhaité pour l'achat, en tant que conditions souhaitées pour l'achat, et
la section de comparaison de conditions, sur la base des données de date de livraison et des données d'emplacement de livraison sur le poisson souhaité pour l'achat acquises par la section d'acquisition de données, et des données d'emplacement de stockage sur le poisson stocké dans la section de base de données, indique en sortie un poisson qui peut être livré à l'emplacement de livraison à la date de livraison, en tant que poisson qui remplit les conditions souhaitées pour l'achat.

3. Un procédé mis en œuvre dans un système, **caractérisé en ce que** :
le système est configuré pour suggérer un poisson qui remplit des conditions souhaitées pour l'achat, le procédé comprenant :
une première étape à apprentissage machine qui analyse, par l'intermédiaire d'un apprentissage machine, une relation entre des données d'image obtenues par capture d'une image d'une darne d'une queue d'un poisson, et des données de qualité indiquant la qualité du poisson ;
une première étape d'entrée qui reçoit en tant qu'entrée des données d'image sur une darne d'une queue d'un poisson en détermination ;
une première étape d'inférence qui reçoit en tant qu'entrée les données d'image sur la darne de la queue du poisson en détermination appliquées en entrée à la première étape d'entrée, et infère et délivre en sortie une qualité étape poisson en détermination, sur la base de la relation analysée par la première étape à apprentissage machine ;
une seconde étape à apprentissage machine qui analyse, par l'intermédiaire d'un apprentissage machine, une relation des données de qualité sur le poisson et de données de poids indiquant un poids du poisson, avec des données de prix indiquant un prix du poisson ;
une seconde étape d'entrée qui reçoit en tant qu'entrée les données d'entrée sur le poisson en détermination ;
une seconde étape d'inférence qui reçoit en tant qu'entrées les données de qualité du poisson en détermination délivrées en sortie par la première étape d'inférence et les données de poids sur le poisson en détermination appliquées en entrée à la seconde étape d'entrée, et infère et délivre en sortie un prix du poisson en détermination, sur la base de la relation analysée par la seconde étape à apprentissage machine ;
une étape de stockage qui stocke, dans une section de base de données, les données de qualité sur le poisson délivrées en sortie par la première étape d'inférence, les données de poids sur le poisson appliquées en entrée depuis la seconde étape d'entrée, et les données de prix sur le poisson délivrées en sortie par la seconde étape d'inférence, en association les unes avec les autres ;
une étape d'acquisition de données qui acquiert en tant que conditions souhaitées pour l'achat, en provenance d'un dispositif utilisateur, des données de qualité, des données de poids, et des données de prix sur un poisson souhaité pour l'achat, en tant que conditions souhaitées pour l'achat ;
une étape de comparaison de conditions qui compare les données de qualité, les données de poids, et les données de prix sur le poisson souhaité pour l'achat acquises à l'étape d'acquisition de données, avec les données de qualité, les données de poids, et les données de prix sur le poisson stockées dans la section de base de données, et indique en sortie un poisson qui remplit les conditions souhaitées pour l'achat ; et
une étape de transmission de données qui transmet au dispositif utilisateur des données sur un poisson qui remplit les conditions souhaitées pour l'achat et délivrées en sortie par la section de comparaison de conditions.
